Europäisches Patentamt

European Patent Office

Office européen des brevets

(19)

(11) Veröffentlichungsnummer: **0 258 823**
**A1**

(12) # EUROPÄISCHE PATENTANMELDUNG

(21) Anmeldenummer: 87112464.0

(22) Anmeldetag: 27.08.87

(51) Int. Cl.4: **B60R 5/04**

(30) Priorität: 04.09.86 DE 3630195

(43) Veröffentlichungstag der Anmeldung:
09.03.88 Patentblatt 88/10

(84) Benannte Vertragsstaaten:
FR GB IT SE

(71) Anmelder: **Seitz, Eugen**
**Allmersbacher Strasse 50**
**D-7152 Aspach-Kleinaspach(DE)**

(72) Erfinder: **Seitz, Eugen**
**Allmersbacher Strasse 50**
**D-7152 Aspach-Kleinaspach(DE)**

(74) Vertreter: **Griessbach, Dieter, Dr.**
**Höger, SteLLrecht + Partner Uhlandstrasse**
**14 c**
**D-7000 Stuttgart 1(DE)**

(54) **Rollo für das Heckabteil eines Kombifahrzeuges.**

(57) Ein Rollo (6) für das Heckabteil eines Kombifahrzeuges weist ein an der Rückenlehne (3) eines Sitzes befestigtes Gehäuse (19) und eine im Gehäuse
(19) drehbar gelagerte, von einer Feder vorgespannte Rollowelle (23) auf. An der Rückenlehne (3)
des Sitzes sind eine erste Befestigungseinrichtung
und an einer Seite des Rollogehäuses (19) eine mit
der ersten in lösbaren Eingriff bringbare zweite Befestigungseinrichtung sowie an einer von der die
zweite Befestigungseinrichtung tragenden Seite verschiedenen Seite des Rollogehäuses (19) eine dritte
Befestigungseinrichtung angeordnet, die mit der ersten Befestigungseinrichtung identisch ist.

*Fig.3*

EP 0 258 823 A1

## Rollo für das Heckabteil eines Kombifahrzeuges

Die Erfindung betrifft ein Rollo für das Heckabteil eines Kombifahrzeuges mit einem an der Rückenlehne eines Sitzes befestigten Gehäuse und mit einer im Gehäuse drehbar gelagerten, von einer Feder vorgespannten Rollowelle.

Bei einem bekannt Rollo dieser Art (DE-OS 27 18 837) sind in einem an der Rückenlehne des Fahrzeugsitzes befestigten Gehäuse zwei Rollowellen mit darauf aufwickelbaren Rollovorhängen angeordnet. Der eine, gewöhnlich netzartig ausgebildete Vorhang kann vertikal, der andere, gewöhnlich undurchsichtig ausgebildete Vorhang kann horizontal im Heckabteil des Kombifahrzeuges ausgespannt werden.

Bei vielen Anwendungsfällen genügt der vertikal ausziehbare Netzvorhang. In diesem Falle ist ein horizontal ausspannbarer Rollovorhang unnötig. Der für ihn vorgesehene Gehäuseteil nimmt im Kraftfahrzeug nur unnötig Platz in Anspruch. Entsprechendes gilt für den Fall, daß lediglich ein horizontal ausspannbarer Rollovorhang benötigt wird.

Es ist Aufgabe der Erfindung, ein gattungsgemäßes Rollo so zu verbessern, daß unter Platzeinsparung wahlweise entweder nur ein vertikaler oder nur ein horizontaler Rollovorhang ausspannbar ist, falls gewünscht, aber beide Rollovorhänge auch gleichzeitig in Betrieb genommen werden können.

Die Aufgabe wird erfindungsgemäß dadurch gelöst, daß an der Rückenlehne des Sitzes eine erste Befestigungseinrichtung und an einer Seite des Rollogehäuses eine mit der ersten in lösbaren Eingriff bringbare, zweite Befestigungseinrichtung angeordnet sowie an einer von der die zweite Befestigungseinrichtung tragenden Seite verschiedenen Seite des Rollogehäuses eine dritte Befestigungseinrichtung angeordnet sind, die mit der ersten Befestigungseinrichtung übereinstimmt.

Die nachstehende Beschreibung einer bevorzugten Ausführungsform der Erfindung dient im Zusammenhang mit beiliegender Zeichnung der weiteren Erläuterung. Es zeigen:

Fig. 1 schematisch in Rückansicht ein Kombifahrzeug;

Fig. 2 eine Seitenansicht des Kombifahrzeugs aus Fig. 1;

Fig. 3 eine schaubildliche Ansicht zweier Rollos für das Heckabteil des Kombifahrzeugs und

Fig. 4 eine vergrößerte Seitenansicht der Rollos aus Fig. 3.

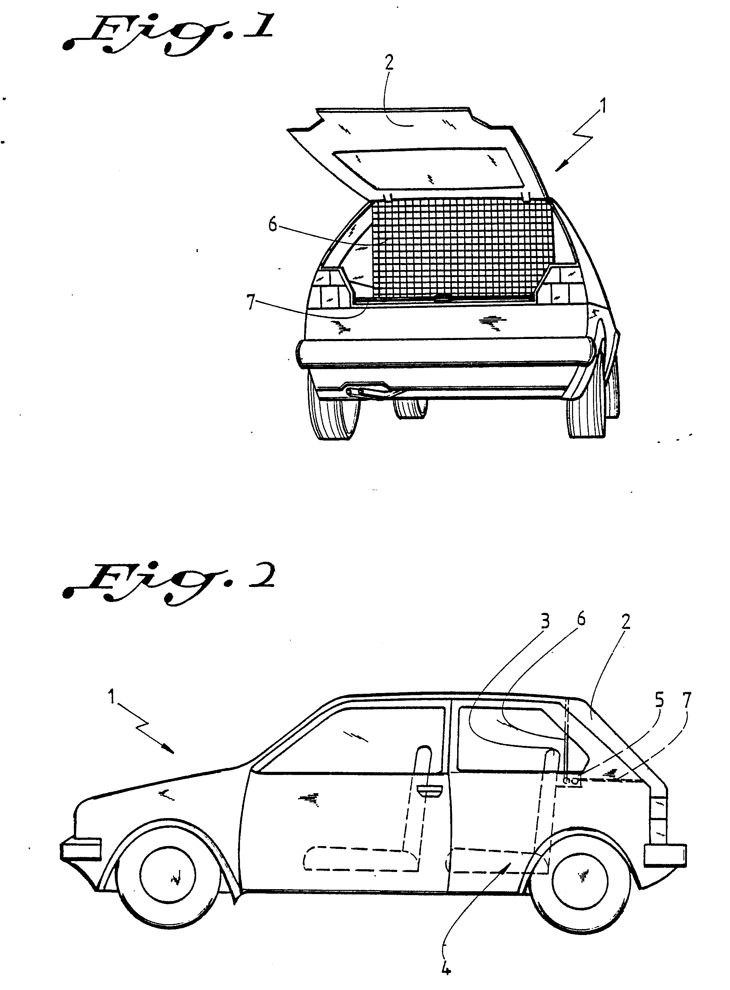

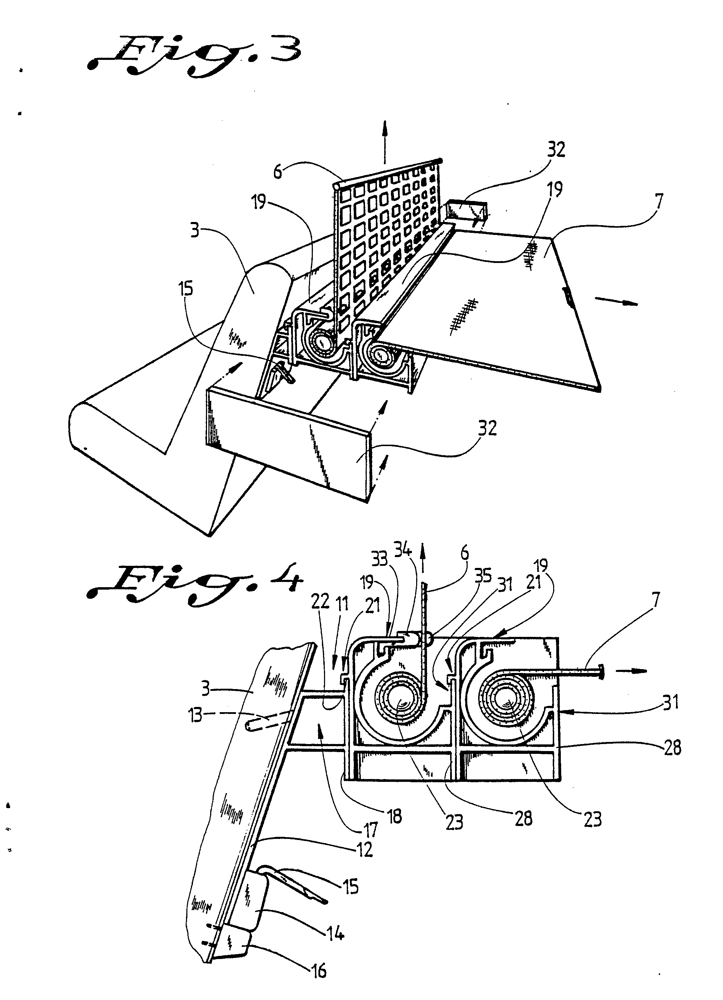

Wie aus Fig. 1 und 2 hervorgeht, ist in einem üblichen Kombifahrzeug 1 mit aufklappbarer Heckklappe 2 an der Rückenlehne 3 des hinteren Fahrzeugsitzes 4 ein Gehäuse 5 für zwei Rollovorhänge 6, 7 angeordnet, von denen der netzartig ausgebildete Rollovorhang 6 vertikal und der undurchsichtig ausgebildete Rollovorhang 7 horizontal im Heckabteil des Fahrzeuges 1 ausgespannt werden können. Mit ihren freien Enden sind die Vorhänge 6, 7 am Dach des Fahrzeuges 1 bzw. an der Heckklappe 2 befestigt. Mit dem Rollovorhang 6 wird verhindert, daß mitgeführte Gepäckstücke oder Tiere, beispielsweise ein Hund, bei plötzlicher Abbremsung des Fahrzeuges aus dem Heckabteil in den vorderen Bereich des Fahrzeuges fliegen. Mit dem Rollovorhang 7 können im Heckabteil gelagerte Güter abgedeckt werden, so daß sie von außen nicht sichtbar sind.

Wie die Fig. 3 und 4 zeigen, ist an der Rücklehne 3 eine erste Befestigungseinrichtung 11 lösbar angeordnet. Bei einer anderen Ausführungsform kann die Befestigungseinrichtung 11 auch fest und unlösbar mit der Rückenlehne 3 verbunden sein. Die Befestigungseinrichtung 11 umfaßt eine Montageplatte 12, von der ein Stift 13 - schräg nach der einen Seite absteht. Auf der anderen Seite der Montageplatte 12 ist ein Spannverschlußelement 14 mit Betätigungsgriff 15 angeordnet, welches mit einem fest an der Rückenlehne 3 vorgesehen Verriegelungsteil 16 mit Schnapp-oder Spannverschluß verriegelbar ist. Die erwähnten Elemente 14, 15 und 16 können beispielsweise Teile eines an sich bekannten Kofferverschlusses oder dergleichen sein. Die Montageplatte 12 ist weiterhin auf der Seite der Verschlußelemente 14, 15 und 16 mit einem Hohlprofil 17 fest verbunden, welches sich vorzugsweise über die ganze Breite der Rückenlehne 3 erstreckt. An seiner Rückseite wird das Profil 17 von einer nach oben und unten überstehenden Stegplatte 18 gebildet.

Zur Verbindung der Montageplatte 12 mit der Rückenlehne 3 wird zunächst der Stift 13 in eine hierfür vorgesehene Bohrung in der Rückwand der Lehne 3 eingesetzt. Anschließend wird durch entsprechende Betätigung des Griffes 15 der aus den Elementen 14, 16 bestehende Schnappverschluß verriegelt. Hierdurch ist die erste Befestigungseinrichtung 11 fest mit der Rückenlehne 3 verbunden und die Stegplatte 18 erstreckt sich horizontal über die Breite der Rückenlehne hinweg.

Ein Rollogehäuse 19 weist an seiner in Fig. 4 links gelegenen Seite eine zweite Befestigungseinrichtung 21 auf, mit deren Hilfe das Rollogehäuse 19 fest an die Befestigungseinrichtung 11 angeschlossen werden kann. Bei der dargestellten Ausführungsform umfaßt die zweite Befestigungseinrichtung 21 eine den oberen Rand der Stegplatte 18 überfangende Nut 22, mittels welcher das Gehäuse 19 auf die Stegplatte 18 aufgesteckt werden kann. In der Nut 22 können an sich bekannte Reibungselemente, z.B. aus Kunststoff, vorgesehen sein, so daß ein strammer Sitz der Nut 22 auf dem oberen Rand der Stegplatte 18 gewährleistet und damit das Gehäuse 19 über die zweite Befestigungseinrichtung 21 und die erste Befestigungseinrichtung 11 fest mit der Rückenlehne 3 verbunden ist. Falls erforderlich, kann auch noch eine Verriegelung des Rollogehäuses 19 an der unteren Kante der Stegplatte 18 vorgesehen werden.

Das Rollogehäuse 19 ist in der dargestellten Weise ebenfalls als durchgehendes Hohlprofil ausgebildet und nimmt auf einer in üblicher Weise durch eine Feder vorgespannten Rollowelle 23 den vertikal ausspannbaren Rollovorhang 6 auf.

Wie dargestellt, ist an der Seite des Rollogehäuses 19, welcher der die zweite Befestigungseinrichtung 21 bildenden Nut 22 gegenüberliegt, wiederum eine Stegplatte 28 ausgebildet, die der Platte 18 der ersten Befestigungseinrichtung 11 entspricht. Die Stegplatte 28 bildet ein drittes Befestigungsteil 31. An dieser dritten Befestigungseinrichtung 31 kann ein zweites Rollogehäuse 19 angeordnet werden, welches mit dem bereits erwähnten Rollogehäuse identisch ist, wobei wiederum eine an diesem Rollogehäuse 19 vorgesehene, zweite Befestigungseinrichtung 21 (mit Nut 22) auf die Stegplatte 28 des ersten Rollogehäuses 19 aufgesteckt werden kann. Das zweite Rollogehäuse enthält, wiederum auf einer federvorgespannten Rollowelle 23 den horizontal ausspannbaren Rollovorhang 7.

Bei beiden Rollogehäusen 19 ist der Schlitz, aus dem die Rollovorhänge 6, 7 austreten können, so angeordnet, daß bei gleicher räumlicher Anordnung der Gehäuse 19 ein Austritt dieser Vorhänge sowohl vertikal nach oben als auch horizontal zur Seite hin möglich ist.

Bei der in Fig. 3 und 4 dargestellten Anordnung können der Rollovorhang 6 vertikal nach oben und der Rollovorhang 7 horizontal nach hinten ausgespannt werden. Falls nur der vertikal ausspannbare Rollovorhang 6 erforderlich ist, wird das zweite Rollogehäuse 19 für den Rollovorhang 7 einfach vom ersten Rollogehäuse 19 abgenommen. Wenn andererseits nur der horizontal ausspannbare Vorhang 7 benötigt wird, nimmt man das erste Rollogehäuse 19 von der ersten Befestigungseinrichtung 11 (Stegplatte 18) ab und bringt an seiner Stelle das zweite, den Rollovorhang 7 enthaltende Gehäuse 19 an. Somit kann,falls wahlweise nur ein einziger Rollovorhang benötigt wird, in einfacher Weise Platz gespart werden.

Bei der dargestellten Ausführungsform sind die zweiten und dritten Befestigungseinrichtungen 21, 31 an einander gegenüberliegenden Seiten der Rollogehäuse 19 angeordnet. Die dritte Befestigungseinrichtung 31 (Stegplatte 28) könnte bei einer abgewandelten Ausführungsform auch an der Unter-oder Oberseite des Rollogehäuses 19 vorgesehen sein, so daß dann die beiden Rollogehäuse 19 nicht nebeneinander (wie in Fig. 3 und 4 dargestellt), sondern unter-oder übereinander angeordnet werden können. An der grundsätzlichen Funktionsweise würde sich hieran nichts ändern.

Wie aus Fig. 3 hervorgeht, können die Stirnseiten der beiden Rollogehäuse 19 durch gemeinsame Abdeckplatten 32 verschlossen werden, die weiterhin auch den Zusammenhalt der beiden Rollogehäuse 19 verbessern. Die Platten 32 können in einfacher Weise mit Hilfe komplementärer Vorsprünge und Aussparungen auf die Gehäuse 19 aufgeklipst werden. Wird nur ein Rollogehäuse 19 be nötigt, so verwendet man eine entsprechend kleinere Abdeckplatte 32.

Wie schließlich noch aus Fig. 3 und 4 hervorgeht, ist auf die horizontal liegende, obere Wand 33 des ersten Rollogehäuses 19 ein Kunststoffprofilteil 34 von der Seite her aufgeschoben, welches sich vorzugsweise über die ganze Breite des netzartigen Rollovorhangs 6 erstreckt. Vom Kunststoffprofilteil 33 stehen in Abständen, die den Abständen der Netzöffnungen entsprechen, zahn-oder zinkenartige Vorsprünge 35 ab, welche in die Netzzwischenräume eintreten. Hierdurch ist bei einer plötzlichen Beanspruchung des netzartigen Vorhangs 6, beispielsweise durch Aufprallen von Gegenständen verhindert, daß dieser sich weiterhin von der ihm zugeordneten Rollowelle 23 ablöst, weil dies die Vorsprünge 35, an denen die Stege des Netzes hängenbleiben, verhindern.

Die Montageplatte 12, welche die erste Befestigungseinrichtung 11 trägt, wird gewöhnlich mit zwei Spannverschlüssen 14, 15, 16 an der oder den Rückenlehnen des hinteren Fahrzeugsitzes verbunden. Falls erforderlich, können mehr als zwei solcher Spannverschlüsse vorgesehen werden.

**Ansprüche**

1. Rollo für das Heckabteil eines Kombifahrzeuges mit einem an der Rückenlehne eines Sitzes befestigten Gehäuse und mit einer im Gehäuse drehbar gelagerten, von einer Feder vorgespannten Rollowelle,
**dadurch gekennzeichnet,**
daß an der Rückenlehne (3) des Sitzes (4) eine erste Befestigungseinrichtung (11) und an einer Seite des Rollogehäuses (19) eine mit der ersten in lösbaren Eingriff bringbare, zweite Befestigungseinrichtung sowie an einer von der die zweite Befestigungseinrichtung (21) tragenden Seite verschiedenen Seite des Gehäuses (19) eine dritte Befestigungseinrichtung (31) angeordnet sind, die mit der ersten Befestigungseinrichtung (11) übereinstimmt.

2. Rollo nach Anspruch 1, dadurch gekennzeichnet, daß die erste Befestigungseinrichtung (11) fest mit der Rücklehne (3) verbunden ist.

3. Rollo nach Anspruch 1, dadurch gekennzeichnet, daß die erste Befestigungseinrichtung (11) lösbar mit der Rückenlehne (3) verbunden ist.

4. Rollo nach Anspruch 3, dadurch gekennzeichnet, daß zur lösbaren Verbindung der ersten Befestigungseinrichtung (11) mit der Rückenlehne (3) ein Spannverschluß (14, 15, 16) vorgesehen ist.

5. Rollo nach einem der Ansprüche 1 bis 4, dadurch gekennzeichnet, daß die erste Befestigungseinrichtung (11) eine im wesentlichen vertikale Stegplatte (18) umfaßt, und die zweite Befestigungseinrichtung (21) eine Nut (22) aufweist, welche die Stegplatte (18) übergreift.

6. Rollo nach Anspruch 5, dadurch gekennzeichnet, daß das Rollogehäuse (19) als Hohlprofil und die Stegplatte (28) und die Nut (21) durchgehend an diesem Profil ausgebildet sind.

7. Rollo nach Anspruch 1, dadurch gekennzeichnet, daß die zweite und die dritte Befestigungseinrichtung (21, 31) an einander gegenüberliegenden Seiten des Rollogehäuses (19) angeordnet sind.

8. Rollo nach einem der voranstehenden Ansprüche, dadurch gekennzeichnet, daß das Rollogehäuse (19) als Rollovorhang (6) ein Netz enthält und am Gehäuse Vorsprünge (35) angeordnet sind, die in die Zwischenräume des Netzes eingreifen.

*Fig.1*

*Fig.2*

*Fig. 3*

*Fig. 4*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 401 799 (DAIMLER-BENZ) <br> * Insgesamt * <br> --- | 1,2 | B 60 R 5/04 |
| D,A | DE-A-2 718 837 (SEITZ) <br> * Ansprüche 1,4,5; Figuren 1-3 * <br> --- | 1,2,8 | |
| A | DE-A-2 729 877 (EBERHARDT GmbH & CO. KG) <br> * Seite 4, Zeile 1 - Seite 6, Zeile 6; Figuren 2,7,8 * <br> ----- | 1,3,4 | |

RECHERCHIERTE SACHGEBIETE (Int. Cl.4)

B 60 R

Der vorliegende Recherchenbericht wurde für alle Patentansprüche erstellt

| Recherchenort | Abschlußdatum der Recherche | Prüfer |
|---|---|---|
| DEN HAAG | 20-11-1987 | MAUSSER,T. |

EPO FORM 1503 03.82 (P0403)